# FASCICULE DE BREVET EUROPEEN

(11) **EP 2 470 819 B1**
(45) Date de publication et mention de la délivrance du brevet: **12.04.2017**
(21) Numéro de dépôt: 10762741.6
(22) Date de dépôt: 23.08.2010
(51) Int. Cl.: F16L 55/035, F16F 1/02, F16F 1/373

(54) **PONT AMORTISSANT**
DÄMPFUNGSBRÜCKE
DAMPING BRIDGE

(30) Priorité: 24.08.2009 FR 0955763
(43) Date de publication de la demande: 04.07.2012
(73) Titulaire: Aliaxis R&D S.A.S., 78540 Vernouillet (FR)
(72) Inventeur: POLLET, Jean-Claude, F-78740 Vaux Sur Seine (FR); GOURNES, Nicolas, F-76110 Bréauté (FR); AUDREZET, Baptiste, F-49600 Beaupréau (FR); COMTÉ, Dominique, F-78410 Aubergenville (FR)
(74) Mandataire: Sonnenberg, Fred
(86) Numéro de dépôt international: PCT/FR2010/051754
(87) Numéro de publication internationale: WO 2011/023892

(56) Documents cités:
- EP-A1- 0 049 741
- EP-A1- 0 666 628
- EP-A2- 1 482 205
- DE-A1- 4 441 476
- DE-A1-102006 025 055
- FR-A2- 2 217 597

## Description

### Domaine technique de l'invention

La présente invention se rapporte à un dispositif de fixation. Plus précisément, la présente invention se rapporte à un dispositif de fixation servant à fixer un tuyau à un mur ou une paroi, et permettant d'atténuer fortement la transmission des forces de vibration du tuyau normales au mur ou à la paroi, diminuant ainsi l'intensité du bruit dit « structurel », tout en assurant un solide maintien du tuyau, ce dernier pouvant se trouver rempli d'eau ou d'un liquide, ce qui peut représenter des charges considérables parallèles au mur ou à la cloison pour des canalisations de gros diamètres.

### Etat de la technique

Un dispositif de fixation pour tuyau comprend typiquement un collier destiné à maintenir le tuyau, une base reliée au collier et destinée à être fixée à une paroi, et des moyens d'amortissement pour amortir les vibrations transmises du tuyau à la paroi. Le but est de limiter le bruit structurel généré par les vibrations transmises à la paroi, et on peut donc appeler ce type de dispositifs de fixation un « collier acoustique ».

Le document EP 0 585 543 décrit un dispositif de fixation à double collier, qui présente de bonnes performances d'amortissement. Cependant, la structure à double collier implique un coût élevé, un montage difficile, un encombrement important, un aspect peu esthétique et ne se prête pas à une réalisation en un seul matériau.

Le document EP 0 666 628 décrit un dispositif de fixation dans lequel des colliers ouverts sont reliés à une base par un pont flexible et des éléments de flexion. Cette structure ne permet pas d'assurer à la fois un bon amortissement et une bonne résistance mécanique.

Le document WO 2004/074707 décrit un dispositif de fixation dans lequel le collier est relié à la base par un pont amortissant constitué de deux anneaux déformables. Le pont amortissant peut se déformer dans toutes les directions, ce qui implique des déplacements du tuyau dans toutes directions. De plus, ce dispositif de fixation ne peut supporter de fortes charges sans déformations excessives.

Le document EP 1 482 205 décrit un dispositif amortisseur de vibrations, comprenant un corps réalisé en une seule pièce et en matériau élastomère sensiblement cylindrique percé en son centre d'un trou débouchant et présentant à chacune de ses extrémités une lèvre annulaire dite respectivement inférieure et supérieure présentant chacune une partie recourbée vers l'intérieur du corps en regard l'une de l'autre caractérisé en ce qu'il comprend une troisième lèvre annulaire dite intermédiaire à section transversale parallélogramme, en ce que les trois lèvres sont adaptées pour entrer en saturation lorsqu'une pression supérieure à 10 N est exercée sur chaque extrémité du corps et simultanément une pression supérieure à 50 N est exercée latéralement sur chaque lèvre et en ce que le trou débouchant a une section transversale rectangulaire au niveau de chaque extrémité et présente une forme en creux entre les deux extrémités. Le document EP 1 482 205 décrit un pont amortissant selon le préambule de la revendication 1.

Ce dispositif à lèvres recourbées doit être réalisé en élastomère et se déforme facilement latéralement et angulairement.

Le document EP 0 793 432 décrit une monture terminale de suspension à pont à trois points pour lattes transversales d'un sommier de literie. Ce dispositif ne permet pas d'amortir des vibrations perpendiculaires à l'axe dudit dispositif.

Le document DE 10 2006 025 055 concerne un coupleur de vibration multidirectionnelle ayant un segment présentant un moyen de fixation variable pour supporter une charge, un corps fait d'un matériau élastique permanent et deux disques rigides aplatis liés l'un à l'autre. Ce dispositif à éléments élastiques toriques se déforme facilement angulairement sous l'effet de charges latérales déportées et sa géométrie ne permet pas d'assurer à la fois une faible rigidité axiale et une grande résistance axiale ou angulaire. De plus, l'ensemble du dispositif est difficilement réalisable en un seul matériau.

### Résumé de l'invention

Un problème que la présente invention propose de résoudre est de fournir un dispositif de fixation qui ne présente pas au moins certains des inconvénients précités de l'art antérieur et qui permet de répondre aux exigences du champ d'application visé. En particulier, un but de l'invention est de fournir un pont amortissant qui présente un bon amortissement des vibrations dans une direction perpendiculaire au plan de la paroi sur laquelle il sera fixé tout en assurant un bon maintien du tuyau.

L'objet proposé par l'invention est un pont amortissant selon la revendication 1.

Le pont amortissant comprend deux membranes, un bras central rigide s'étendant perpendiculairement auxdites membranes et reliant lesdites membranes entre elles, et une structure latérale rigide reliant lesdites membranes entre elles au moins sur une partie de leur bord extérieur, caractérisé en ce que lesdites membranes sont sensiblement planes et sensiblement parallèles entre elles, distantes l'une de l'autre, et ancrées d'une part dans ledit bras central et d'autre part dans ladite structure.

Grâce à ces caractéristiques, d'une part, les vibrations subies par le bras perpendiculairement aux membranes rencontrent peu d'efforts, dû à la réaction de déformation des membranes, et sont transmises atténuées à la structure, et, d'autre part, les membranes planes, parallèles et ancrées dans le bras central et dans la structure, ne se déforment que très peu sous l'action de charges orientées dans une direction parallèle au plan de ces membranes. De cette façon, les charges perpendiculaires à l'axe du bras (par exemple, un tuyau installé dans un collier monté sur le bras central) seront transmises sans déformation sensible du pont amortissant. En outre, cette caractéristique permet un bon maintien du tuyau.

En effet, sous l'action d'une charge déportée agissant sur le bras central rigide dans une direction parallèle au plan des membranes, ce bras agit à la façon d'un levier qui vient prendre appui sur l'une et l'autre des membranes, avec pour forces résultantes des forces parallèles à la direction de la charge et s'exerçant dans le plan de ces membranes. Ces membranes étant planes et ancrées dans la structure rigide latérale, elles supportent particulièrement bien en traction les forces de réaction causées par le bras central. Il en résulte, s'agissant d'un effet de levier, que ce dispositif sera d'autant plus efficace que les membranes sont distantes l'une de l'autre. La distance diminué ainsi
a) les forces de réaction auxquelles les membranes sont soumisses,
b) leur déformation, aussi faible soit-elle, et
c) les déformations de la structure et du bras, aussi minimes soient-elles.

La distance maximale entre les membranes sera fonction de l'encombrement maximal souhaité du dispositif.

Selon un mode de réalisation, ladite structure présente une forme cylindrique de génératrice parallèle audit bras et de courbe directrice correspondant à un bord d'une desdites membranes.

De préférence, ladite structure présente une forme cylindrique de révolution, ledit bras présentant une forme de cylindre de révolution et étant coaxial avec ladite structure.

Cette forme permet un très bon amortissement parallèlement au bras central tout en offrant une très bonne tenue mécanique dans toutes les directions perpendiculaires au bras central.

Une variante consiste à évider la membrane plane par des trous allongés orientés radialement ou à remplacer la membrane plane par une structure plane consistant en un ensemble de rayons de matière reliant le bras central à la structure latérale, par exemple rectilignes ou en forme de secteurs.

Selon un autre mode de réalisation, ladite structure comprend deux bras latéraux situés de part et d'autre dudit bras, lesdites membranes présentant une forme de plaque s'étendant d'un desdits bras latéraux à l'autre.

Avantageusement, le pont amortissant est réalisé en une pièce mono-matière.

De préférence, lesdites membranes présentent une épaisseur plus faible que ledit bras et ladite structure.

Ainsi, la structure et le bras central sont plus rigides que les membranes, même quand ils sont réalisés dans le même matériau. Ce sont donc les membranes qui se déforment quand le pont amortissant subit des vibrations.

L'invention propose aussi un dispositif de fixation comprenant un collier destiné à maintenir un tuyau, une base destinée à être fixée à une paroi, et un pont amortissant selon l'invention ci-dessus reliant ledit collier à ladite base.

Dans une variante, le bras central du pont amortissant est fixé lui-même à la paroi. Cette partie du pont amortissant fixée à la paroi constitue donc, dans cette variante, la base.

Avantageusement, ledit pont amortissant, ladite base et au moins une partie du collier sont réalisés en une pièce mono-matière.

Selon un mode de réalisation, le dispositif de fixation comprend une première butée fixée au collier et une deuxième butée reliée à la base, la première butée et la deuxième butée étant aptes à coopérer pour empêcher un déplacement du collier à distance de la base, d'une amplitude supérieure à un seuil donné.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue en perspective, en coupe partielle, d'un pont amortissant selon un premier mode de réalisation, et d'une base de fixation,
- la figure 2 est une vue en coupe du pont amortissant et de la base de la figure 1,
- les figures 3 et 4 sont des vues schématiques de deux dispositifs de fixation comprenant le pont amortissant de la figure 1,
- la figure 5 est une vue en perspective d'un pont amortissant selon un deuxième mode de réalisation,
- les figures 6 et 7 représentent, en perspective, deux dispositifs de fixation comprenant un pont amortissant similaire à celui de la figure 5.

### Description détaillée de modes de réalisation de l'invention

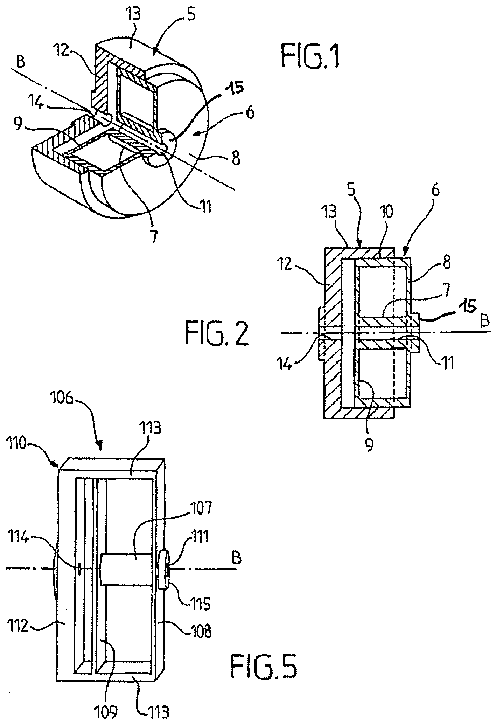

Les figures 1 et 2 représentent un pont amortissant 6 selon un premier mode de réalisation et une base 5.

Le pont amortissant 6 comprend un bras central 7, deux membranes 8 et 9, planes parallèles et distantes l'une de l'autre, et une structure 10 latérale. Les membranes sont, dans leur centre, ancrées dans le bras central et, sur leur périphérie, ancrées dans la structure latérale.

Le bras central 7 présente une forme de cylindre de révolution, d'axe B, traversé par un orifice 11 aménagé pour réaliser un moyen de fixation. Les membranes 8 et 9 sont deux disques parallèles entre eux, perpendiculaires à l'axe B, centrés sur l'axe B. Le bras central 7 relie donc le centre de la membrane 8 au centre de la membrane 9. L'extrémité 15 du bras central 7 dépasse du disque 8. La structure 10 présente une forme de cylindre de révolution, également d'axe B, qui entoure le bras central 7. La structure 10 relie entre elles les circonférences des membranes 8 et 9. Autrement dit, dans chaque direction perpendiculaire à l'axe B, la structure 10 relie les membranes 8 et 9 de part et d'autre du bras central 7.

Dans une variante non représentée, les deux membranes ont une géométrie différente, par exemple un diamètre différent. La structure qui les relie peut alors avoir une forme tronconique.

Les membranes 8 et 9 présentent une faible épaisseur par rapport à leur dimension perpendiculairement à l'axe B. De plus, les membranes sont réalisées en un matériau déformable élastiquement, par exemple en métal ou en matériau thermoplastique. La structure 10 et le bras central 7 sont plus rigides que les membranes 8 et 9. Par exemple, s'ils sont réalisés dans le même matériau, ils sont plus épais que les membranes 8 et 9.

La base 5 présente une paroi de fond 12 traversée par un orifice 14 central aménagé pour réaliser un moyen de fixation sur un mur de façon que les membranes du pont soient parallèles au plan de ce mur, et une paroi latérale 13 en forme de cylindre de révolution. Cette paroi latérale 13 est adjacente à la structure latérale 10, de sorte que la base 5 enveloppe une partie du pont amortissant 7 et notamment la membrane 9. Toutefois, elle n'enveloppe pas la membrane 8, ni l'extrémité du bras 15. Sur les figures 1 et 2, le pont amortissant 6 est fixé solidairement à la base 5 par l'intermédiaire de la structure 10. Cette fixation peut être permanente, par exemple par emmanchement à force, par collage ou par soudage. Elle peut aussi être réglable de façon à pouvoir ajuster la distance entre l'extrémité 15 du bras central 7 et la paroi de fond 12. Le réglage s'obtient en faisant coulisser la structure 10 dans la paroi latérale 13 puis en la maintenant en place dans la position désirée par tout moyen approprié (par exemple, vissage de la structure 10 dans la paroi latérale 13, fentes et pattes de serrage aménagées sur la paroi 13, ...)

Le pont amortissant 6 permet de relier à la base 5 un élément fixé à l'extrémité 15 du bras central 7, tout en assurant deux fonctions. D'une part, les vibrations orientées parallèlement à l'axe B sont amorties par déformation des membranes 8 et 9. La base 5 subit donc peu de forces de vibration parallèlement à l'axe B. D'autre part, les charges perpendiculaires à l'axe B sont transmises à la base 5 sans déformation sensible du pont amortissant 6. Ainsi, l'extrémité 15 du bras central 7 offre un bon point de fixation.

L'élément fixé au bras central 7 est par exemple un collier 4, comme décrit ci-dessous. Bien entendu, le pont amortissant 6 peut être utilisé dans toute autre application.

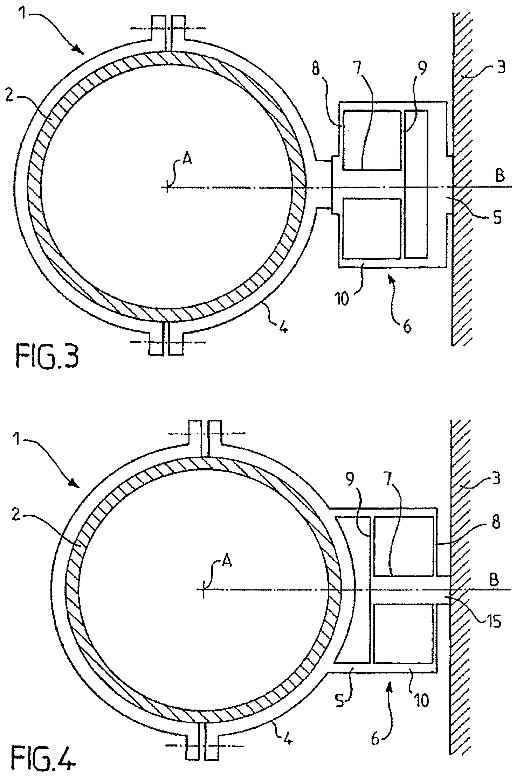

La figure 3 est un schéma de principe représentant un dispositif de fixation 1, permettant de fixer un tuyau 2 à une paroi 3. Le dispositif de fixation 1 permet d'amortir les vibrations du tuyau 2 transmises à la paroi 3 et donc de limiter le bruit structurel généré. Ainsi, le dispositif de fixation 1 peut aussi être appelé un collier acoustique. La paroi 3 peut être par exemple un mur, une cloison ou un plafond. Le tuyau 2 s'étend selon un axe A perpendiculaire au plan de la figure et parallèle à la paroi 3.

Le dispositif de fixation 1 comprend un collier 4, la base 5 et le pont amortissant 6 des figures 1 et 2, qui sont représentés de manière plus schématique. Le pont amortissant 6 relie le collier 4 à la base 5. Le collier 4 est fixé au pont amortissant 6 par exemple par une vis (non représentée) passant dans l'orifice 11. La base 5 est fixée à la paroi 3 par exemple par une vis (non représentée) passant dans l'orifice 14.

Comme expliqué ci-dessus, dans une variante, il est possible de régler la distance entre l'extrémité 15 et la paroi de fond 12. La distance entre le tuyau 2 et la paroi 3 peut donc être réglée.

Sur la figure 3, le collier 4 est représenté avec deux demi-anneaux fixés l'un à l'autre pour entourer le tuyau 2. En variante, le collier 4 pourrait présenter toute autre configuration permettant de maintenir le tuyau 2. Grâce au pont amortisseur 6, il est possible de serrer fortement le tuyau 2 afin de le maintenir fermement en place et d'éviter tout glissement dans le collier 4, ceci sans compromettre les qualités acoustiques du dispositif de fixation 1. Le même dispositif de fixation 1 peut également être utilisé sans serrage du collier 4 sur le tuyau 2, tout en conservant les mêmes qualités acoustiques.

La base 5 présente une face d'appui en contact avec la paroi 3, à laquelle elle est fixée, par exemple par vissage et qui permet au pont d'être positionné tel que ses membranes soient parallèles à la surface de la paroi.

Ainsi, d'une part les membranes 8 et 9 peuvent se déformer pour autoriser un déplacement du bras central 7 par rapport à la base 5, dans la direction de l'axe B. Ce déplacement impliquant une déformation élastique a pour effet d'amortir les vibrations du tuyau 2 perpendiculaires à la paroi 3. Les forces de vibration transmises à la paroi 3 sont faibles et le bruit structurel généré est donc limité.

Typiquement, pour une canalisation d'évacuation d'eau, l'amplitude des vibrations du tuyau est inférieure à 100 ou 200 microns dans la plage de fréquences de 50 à 800 Hz et devient encore plus faible vers les fréquences audibles plus élevées. Ces vibrations doivent être amorties le mieux possible. Les performances des colliers acoustiques connus peuvent être quantifiées entre 30 dBA pour les plus simples et 15 à 20 dBA pour les plus performants. Des mesures réalisées ont permis de constater que le dispositif de fixation 1 peut atteindre une performance de 10 dBA et moins. Les valeurs précitées sont celles du bruit structurel obtenu selon la norme EN 14366.

D'autre part, en raison de la géométrie plane et de la disposition parallèle en couple, distante et ancrée des membranes 8 et 9, celles-ci ne peuvent se déformer dans la direction perpendiculaire à l'axe B. Le collier 4 ne peut pas se déplacer parallèlement à la paroi 3 ni s'incliner notablement. Le dispositif de fixation 1 permet donc un bon maintien en place du tuyau 2.

Le dispositif de fixation 1 empêche donc, lorsque le collier 4 est serré sur le tuyau 2, les déplacements du tuyau 2 parallèlement à la paroi 3 tout en autorisant et amortissant les vibrations de faible amplitude perpendiculairement à la paroi 3.

La figure 4 représente une variante du dispositif de fixation 1 de la figure 3. Les mêmes références que sur la figure 1 sont utilisées, sans risque de confusion, et une description détaillée n'est plus nécessaire.

Dans cette variante, la base 5 est reliée au collier 4 et le pont amortissant 6 est relié, par son bras 7, à la paroi 3. L'extrémité 15 du bras 7 constitue donc la base du dispositif de fixation 1, en ce sens qu'il s'agit de la partie reliée à la paroi 3.

La figure 5 représente un pont amortissant 106 selon un deuxième mode de réalisation. Dans ce mode de réalisation les membranes ne sont plus sur toute leur périphérie ancrées dans la structure latérale. L'intérêt d'un tel mode de réalisation réside dans la facilité de fabrication par moulage en une seule pièce, par exemple en matériau thermoplastique. Dans ce mode de réalisation, la paroi latérale 13 de la base 5 n'est plus adjacente à la structure latérale 10 du pont amortissant 7, mais la paroi latérale de la base 5 se trouve dans la continuité de la structure latérale du pont amortissant 7. Par conséquent, la paroi latérale 13 et la structure latérale 10 ne forment qu'un (structure 110 formée par les bras latéraux 113).

Le pont amortissant 106 comprend un bras central 107, deux membranes 108 et 109 et une structure 110.

Le bras central 107 présente une forme de cylindre de révolution, d'axe B, traversé par un orifice 111 permettant la fixation d'un collier ou la fixation à une paroi. En variante, le bras central pourrait présenter d'autres géométries telles que par exemple une forme cylindrique de section carrée ou rectangulaire. Les membranes 108 et 109 sont deux plaques planes rectangulaires parallèles entre elles, perpendiculaires à l'axe B, centrées et ancrées sur l'axe B. Le bras central 7 relie donc le centre de la membrane 108 au centre de la membrane 109. L'extrémité 115 du bras central 107 dépasse de la membrane 108. La structure 110 comprend une paroi de fond 112 et deux bras latéraux 113 sur lesquels viennent s'ancrer les extrémités des membranes 108 et 109. La paroi de fond 112 est rectangulaire, parallèle aux membranes 108 et 109, mais est plus épaisse et plus rigide. Elle est traversée par un orifice 114 permettant sa fixation à la paroi ou la fixation d'un collier. Les bras latéraux 113, de forme rectangulaire, s'étendent depuis la paroi de fond 112 parallèlement à l'axe B, de part et d'autre du bras central 107. Ils relient les extrémités des membranes 108 et 109 entre elles.

Autrement dit, les membranes 108 et 109 sont reliées par la structure 110, de part et d'autre du bras central 107 selon une direction perpendiculaire à l'axe B et parallèle à la longueur des membranes 108 et 109.

Dans une variante non représentée, les deux membranes ont une géométrie différente, par exemple une longueur ou une largeur différente. La structure qui les relie a alors une forme adaptée.

De manière similaire au pont amortissant 6, le pont amortissant 106 assure deux fonctions. D'une part, les vibrations orientées parallèlement à l'axe B et qui seront transmises à la paroi de support sont amorties par déformation des membranes 108 et 109. D'autre part, les charges perpendiculaires à l'axe B et parallèles à la longueur des membranes 108 et 109 sont transmises sans déformation sensible.

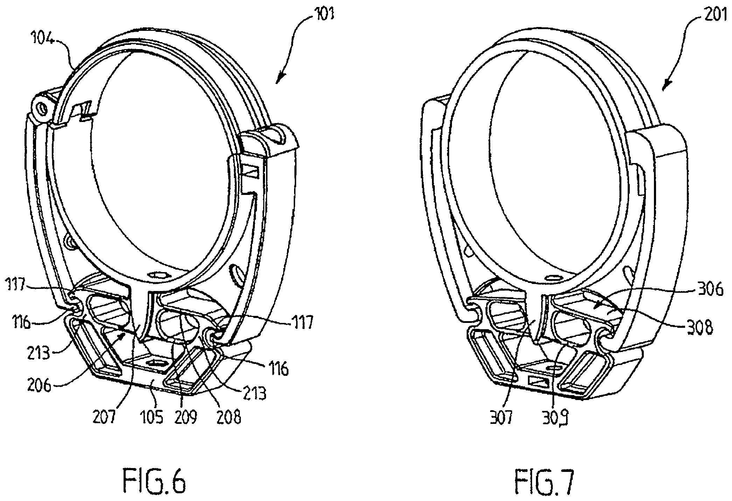

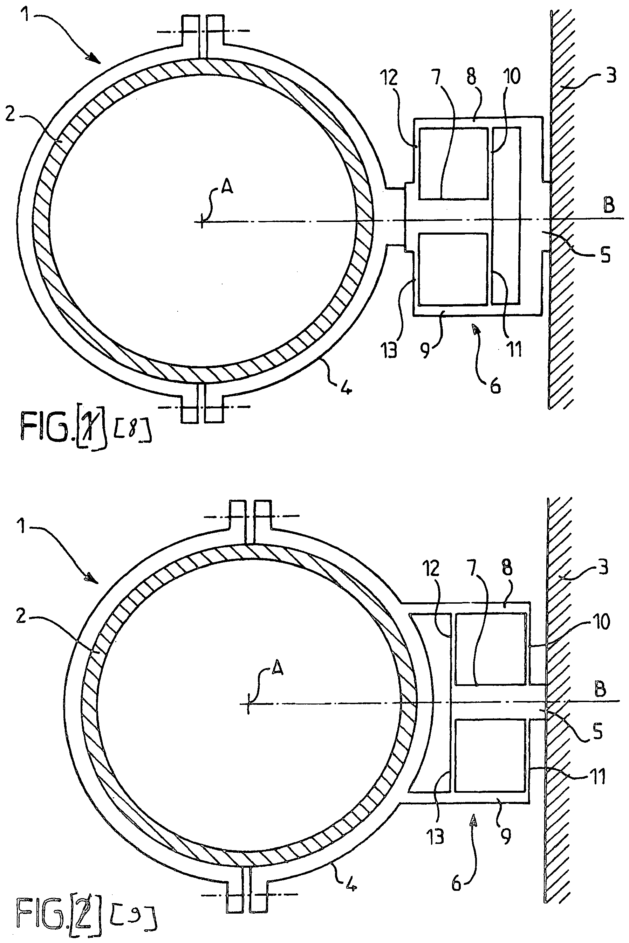

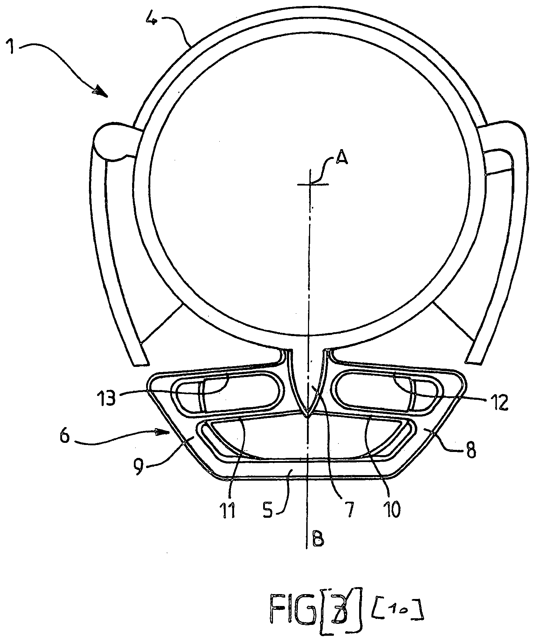

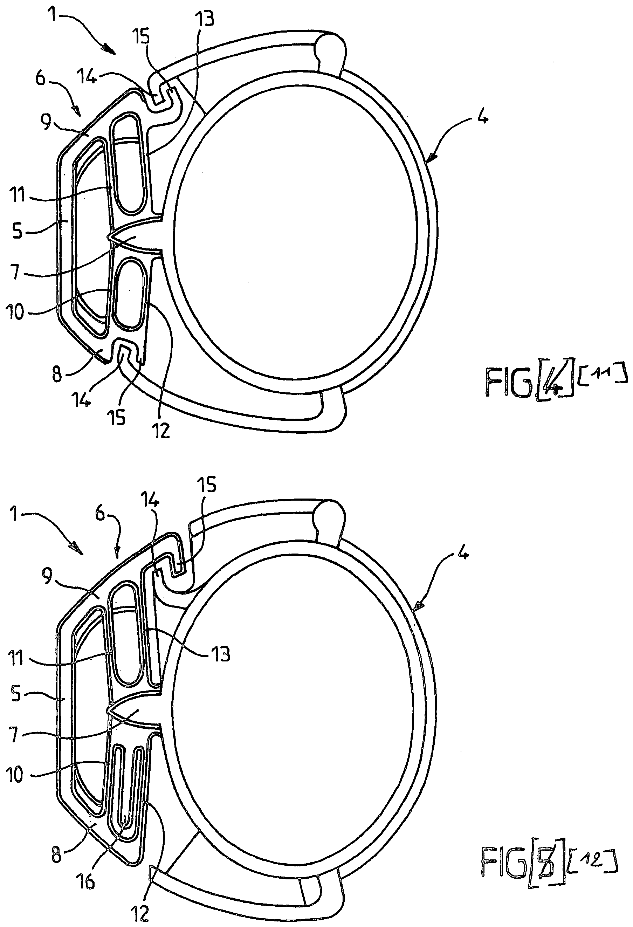

La figure 6 représente un dispositif de fixation 101 comprenant un pont amortissant 206 réalisé selon le même principe que le pont amortissant 106 de la figure 5, c'est-à-dire avec deux membranes planes 208 et 209 en forme de rectangles parallèles. Le dispositif de fixation 101 comprend un collier 104 et une base 105, reliés par le pont amortissant 206. Le pont amortissant 206 comprend notamment un bras central 207, deux membranes planes 208 et 209 ancrées d'une part sur le bras central 207 et d'autre part sur les bras latéraux 213 et deux bras latéraux 213.

Le dispositif de fixation 101 comprend également deux butées 116 reliées au collier 104, et deux butées 117 situées aux extrémités des bras latéraux 213 du pont amortissant 206. Comme on peut le voir, les butées 116 et 117 sont réalisées par des crochets. En variante, d'autres formes et positions pourraient être utilisées. Les butées 116 et 117 peuvent coopérer pour empêcher un déplacement de trop grande amplitude du bras central 207 à distance de la base 105. Cela est particulièrement utile lorsque la base 105 est fixée au plafond. En effet, le poids exercé par le tuyau 2 peut augmenter, par exemple en cas de tuyau bouché. Les butées 116 et 117 entrent alors en contact et empêchent une déformation trop importante du pont amortissant 206.

De plus, un avantage du dispositif de fixation 101 est qu'il peut être réalisé en une pièce mono-matière, par moulage, comme on peut le déduire de la forme représentée sur la figure 6.

La figure 7 représente un dispositif de fixation 201 similaire au dispositif de fixation 101 de la figure 6. Il n'est pas nécessaire d'en faire une description détaillée. On peut remarquer que les membranes 308 et 309 du pont amortissant 306 forment chacune un angle légèrement inférieur à 180°, au niveau du bras central 307. Par exemple, l'angle est compris entre 175° et 180°. Autrement dit, les membranes 308 et 309 sont sensiblement parallèles. Cette configuration présente un amortissement moindre par rapport à celle de la figure 6. Cependant, un tel dispositif de fixation peut être plus facile à fabriquer par moulage.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Par exemple, les différentes parties du pont amortissant ou du dispositif de fixation pourraient être réalisées en des matières différentes, par exemple selon leurs différentes fonctionnalités et leurs caractéristiques recherchées. Par exemple, les membranes pourraient être réalisées en un matériau moins rigide que celui de la structure ou en feuilles métalliques de faible épaisseur.

## Revendications

1. Pont amortissant (6, 106, 206, 306), destiné à fixer un tuyau à une paroi et à atténuer les vibrations transmises dudit tuyau à ladite paroi, comprenant: deux membranes (8, 9 ; 108, 109 ; 208, 209 ; 308, 309) destinées à être agencées parallèlement à ladite paroi et audit tuyau, un bras (7, 107, 207, 307) central s'étendant perpendiculairement auxdites membranes et reliant lesdites membranes entre elles au niveau de leur centre, et une structure (10, 110) présentant au moins une portion latérale perpendiculaire auxdites membranes qui relie lesdites membranes entre elles au moins sur une partie de leur bord extérieur, **caractérisé en ce que** : lesdites membranes sont déformables élastiquement, et que la structure et le bras central, également déformables, sont plus rigides que lesdites membranes, de sorte que les vibrations orientées perpendiculairement à la paroi et subies par le bras central sont transmises atténuées à la structure, par déformation des membranes,
et que lesdites membranes sont sensiblement planes et sensiblement parallèles entres elles, et distantes l'une de l'autre, de sorte que les charges orientées parallèles à la paroi sont transmises sans déformation sensible du pont amortissant et donc des membranes.

2. Pont amortissant selon la revendication précédente, dans lequel ledit bras central (7, 107, 207, 307) et lesdites structures (10, 110) sont rigides.

3. Pont amortissant selon la revendication précédente, dans laquelle ladite structure (10) présente une forme cylindrique de génératrice parallèle audit bras (7) et de courbe directrice correspondant à un bord d'une desdites membranes (8).

4. Pont amortissant selon la revendication précédente, dans lequel ladite structure (10) présente une forme cylindrique de révolution, ledit bras (7) présentant une forme de cylindre de révolution et étant coaxial avec ladite structure.

5. Pont amortissant selon la revendication 1, dans lequel ladite structure (110) comprend deux bras latéraux (113, 213) formant la portion latérale perpendiculaire auxdites membranes, lesdits bars latéraux étant situés de part et d'autre dudit bras (107, 207), lesdites membranes (108, 109 ; 208, 209 ; 308, 309) présentant une forme de plaque s'étendant d'un desdits bras latéraux à l'autre.

6. Pont amortissant selon l'une des revendications précédentes, réalisé en une pièce mono-matière.

7. Pont amortissant selon l'une des revendications précédentes, dans lequel lesdites membranes présentent une épaisseur plus faible que ledit bras et ladite structure.

8. Dispositif de fixation (1, 101, 201) comprenant un collier (4, 104) destiné à maintenir un tuyau (2), une base (5, 105) destinée à être fixée à une paroi (3), et un pont amortissant selon la revendication 1 reliant ledit collier à ladite base.

9. Dispositif de fixation selon la revendication précédente, dans lequel ledit pont amortissant, ladite base et au moins une partie du collier sont réalisés en une pièce mono-matière.

10. Dispositif de fixation selon la revendication 8 ou 9, comprenant une première butée (116) fixée au collier et une deuxième butée (117) reliée à la base, la première butée et la deuxième butée étant aptes à coopérer pour empêcher un déplacement du collier à distance de la base, d'une amplitude supérieure à un seuil donné.

## Patentansprüche

1. Dämpfungsbrücke (6, 106, 206, 306), bestimmt zur Befestigung eines Rohres an einer Wand und zur Dämpfung von Vibrationen, die von dem Rohr auf die Wand übertragen sind/werden, umfassend: zwei Membranen (8, 9, 108, 109, 208, 209, 308, 309), die dazu bestimmt sind, parallel zu der Wand sowie dem Rohr ausgebildet zu sein, einen mittleren Arm (7, 107, 207, 307), der sich senkrecht zu den Membranen erstreckt und die Membranen auf dem Niveau ihrer Zentren miteinander verbindet, und eine Struktur (10, 110), die mindestens eine Lateralabschnitt aufweist, senkrecht ausgerichtet zu den Membranen und die Membranen über mindestens einen Teil der Außenränder davon miteinander verbindet,
**dadurch gekennzeichnet, daß** die Membranen elastisch verformbar sind und daß die Struktur und der Mittelarm, ebenfalls verformbar, starrer sind als die Membranen, so daß Vibrationen, die senkrecht zu der Wand orientiert sind und von dem Mittelarm erfahren werden, auf die Struktur in einer abgeschwächten Weise durch Verformung der Membranen übertragen werden,
und daß die Membranen im Wesentlichen eben/flach und im Wesentlichen parallel zueinander und voneinander beabstandet sind, so daß Lasten, die parallel zur Wand gerichtetet sind, ohne wesentliche Verformung der Dämpfungsbrücke und somit der Membranen übertragen werden.

2. Dämpfungsbrücke nach dem vorhergehenden Anspruch, bei welcher der Mittelarm (7, 107, 207, 307) und die Struktur (10, 110) starr sind.

3. Dämpfungsbrücke nach dem vorhergehenden Anspruch, bei welcher die Struktur (10) eine zylindrische Form mit einer zum Arm (7) parallelen Erzeugenden und einer der Kante einer der Membranen (8) entsprechende Leitkurve aufweist.

4. Dämpfungsbrücke nach dem vorhergehenden Anspruch, bei welcher die Struktur (10) eine zylindrische Rotationsgestalt aufweist, wobei der Arm (7) eine zylindrische Rotationsgestalt aufweist und koaxial zu der Struktur ist.

5. Dämpfungsbrücke nach Anspruch 1, bei welcher die Struktur (110) zwei seitliche Arme (113, 213) aufweist, die den Lateralabschnitt senkrecht zu den Membranen ausbilden, sich diesseits und jenseits des Armes (107, 207) befindlich, wobei die Membranen (8, 9, 108, 109, 208, 209, 308, 309) eine Platte ausbilden, sich erstreckend von einem der seitlichen Arme zum anderen.

6. Dämpfungsbrücke nach einem der vorhergehenden Ansprüche, einstückig aus einem mono-Material gebildet.

7. Dämpfungsbrücke nach einem der vorhergehenden Ansprüche, bei welcher die Membranen eine Dicke aufweisen, die kleiner ist als jene des Armes und der Struktur.

8. Befestigungsvorrichtung (1, 101, 201) mit einer Schelle (4, 104), die dazu bestimmt ist ein Rohr (2) zu stützen, einem an einer Wand (3) zu befestigenden Sockel (5, 105) und einer Dämpfungsbrücke nach Anspruch 1, die Schelle mit dem Sockel/der Basis verbindend.

9. Befestigungsvorrichtung nach dem vorhergehenden Anspruch, bei welcher die Dämpfungsbrücke, die Basis bzw. der Sockel und mindestens ein Teil der Schelle einstückig aus einem sortenreinen oder mono-Material gebildet sind.

10. Befestigungsvorrichtung nach Anspruch 8 oder 9, mit einem ersten an der Schelle befestigten Anschlag (116) und einem zweiten mit der Basis oder dem Sockel verbundenen Anschlag (117), wobei der erste Anschlag und der zweite Anschlag fähig sind zusammenzuwirken, um ein Versetzung der Schelle im/unter Abstand von der Basis bzw. dem Sockel bei einer Amplitude, die größer als eine gegebene Schwelle ist zu verhindern.

## Claims

1. Damping bridge (6, 106, 206, 306), for fixing a pipe to a wall and to attenuate the vibrations transmitted from said pipe to said wall, comprising two membranes (8, 9; 108, 109; 208, 209; 308, 309) designed to be arranged in a parallel manner to said wall and said pipe, a central arm (7, 107, 207, 307) extending perpendicularly to said membranes and connecting said membranes together at their center, and a structure (10, 110) having at least one lateral portion perpendicular to said membranes connecting said membranes together over at least a portion of the outer edge thereof,
**characterized in that**: said membranes are elastically deformable, and **in that** the structure and the central arm, also deformable, are more rigid than said membranes, such that the vibrations oriented perpendicularly to the wall and experienced by the central arm are transmitted, attenuated, to the structure, by deformation of the membranes,
and **in that** said membranes are substantially flat and substantially parallel to each other, distant from each other, such that the loads oriented parallel to the wall are transmitted without significant deformation of the damping bridge and thus of the membranes.

2. Damping bridge according to the preceding claim, wherein said central arm (7, 107, 207, 307) and said structures (10, 110) are rigid.

3. Damping bridge according to the preceding claim, wherein said structure (10) shows a cylindrical shape having a generatrix parallel to said arm (7) and a directrix corresponding to an edge of one of said membranes (8).

4. Damping bridge according to the preceding claim, wherein said structure (10) shows a cylindrical rotating shape, said arm (7) showing a cylindrical rotating shape and being coaxial with said structure.

5. Damping bridge according to claim 1, wherein said structure (110) includes two lateral arms (113, 213) forming the lateral portion perpendicular to said membranes, said lateral arms being located on each side of said arm (107, 207), said membranes (108, 109; 208, 209; 308 , 309) having a plate shape extending from one of said lateral arms to the other.

6. Damping bridge according to any one of the preceding claims, made of a single-material piece.

7. Damping bridge according to any one of the preceding claims, wherein said membranes have a thickness smaller than said arm and said structure.

8. Fastening device (1, 101, 201) comprising a collar (4, 104) for maintaining a pipe (2), a base (5, 105) for being fixed to a wall (3), and a damping bridge according to claim 1 connecting said collar to said base.

9. Fastening device according to the preceding claim, wherein said damping bridge, said base and at least part of said collar are made of a single-material piece.

10. Fastening device according to claim 8 or 9, including a first stop (116) fixed to the collar and a second stop (117) connected to the base, the first stop and the second stop being able to cooperate to prevent movement of the collar at distance from the base, with an amplitude greater than a given threshold.
